# EUROPEAN PATENT SPECIFICATION

(11) **EP 0 344 346 B1**
(45) Date of publication and mention of the grant of the patent: **26.04.1995**
(21) Application number: 88108781.1
(22) Date of filing: 01.06.1988
(51) Int. Cl.: G02F 1/17

(54) **Optical switching device**
Optische Schaltvorrichtung
Dispositif de commutation optique

(43) Date of publication of application: 06.12.1989
(73) Proprietor: TEXAS INSTRUMENTS INCORPORATED, Dallas Texas 75265 (US)
(72) Inventor: Fukuda, Yoshimasa, Yono-shi Saitama-prefecture (JP)
(74) Representative: Leiser, Gottfried, Dipl.-Ing.

(56) References cited:
- US-A- 3 854 795
- JAPANESE JOURNAL OF APPLIED PHYSICS, Supplements, vol. 24, suppl. 24-3, 1985,pages 45-48, Tokyo, JP; K. YOSHINO et al.: "Characteristics of electro-opticeffect of ferroelectric liquid crystals in infrared range"
- JAPANESE JOURNAL OF APPLIED PHYSICS, vol. 22, no. 3, part 2, March 1983, pagesL157-L158, Tokyo, JP; K. YOSHINO et al.: "Proposal of electro-optical switchingand memory devices utilizing doping and undoping processes of conducting polymers"
- POLYMER JOURNAL, vol. 19, no. 1, 1987, pages 147-156; R.S. POTEMBER et al.:"Electronic devices from conducting organics and polymers"

## Description

### FIELD OF THE INVENTION

The invention relates to an optical switching device as defined in the precharacterizing part of claim 1.

### DETAILED DESCRIPTION OF THE INVENTION

### 1. Industrial Field

The invention relates to an optical switching device, for example, to an optical switching device suitable for converting information to optical signals and treating the latter.

### 2. Prior Art

So called Neumann-type computers are popular, comprising an input unit to receive information, a memory unit to store information, an operational unit to calculate, an output unit to output processed information and a control unit to make the above respective units operate according to predecided procedure. Sequential processing is accomplished by the above units.

Recently, a demand for high speed operation of computers, particularly for high speed processing of pictures or patterns, have been enhanced. Especially when treating two-dimensional information such as pictures, the above sequential processing method can not fully meet the demand for high speed processing.

To solve this problem, optical computers have been proposed using photon (light quantum) instead of electron as information medium.

Alternatively, optical switching devices have been manufactured for trial using materials, for example, liquid crystal, lithium niobate, gadolinium-galium-garnet (GGG), gallium-arsenic, gallium-aluminium, lead-lanthanum-zirconium-titanium alloy, etc. However, when applying these optical switching devices to the high speed processing, many problems are encountered on structure, size when integrated, difficulties in industrialization due to the complicated structure, and availability of materials. It is said these problems result in a poor probability for practical use in the future. The switching speed of the switching devices comprising optical elements using the above inorganic materials is in the range of nano-second (10⁻⁹ second) order and therefore does not necessarily exhibit a merit of using photon.

References to optical switching devices can be found in Japanese Journal of Applied Physics, Supplements, 24, suppl. 24-3, 1985, pp. 45-48, Tokyo, Japan; K. Yoshino et al.: "Characteristics of Electro-Optic Effect of Ferroelectric Liquid Crystals in Infrared Range" and in Japanese Journal of Applied Physics, 22, No. 3, part 2, March 1983, pp. L157-L158, Tokyo, Japan; K. Yoshino et al.: "Proposal of Electro-Optical Switching and Memory Devices Utilising Doping and Undoping Processes of Conducting Polymers".

### 3. Object of the Invention

The invention was made in consideration of the above-mentioned situation and its object is to provide an optical switching device having a quick response enabling super high-speed processing of information.

### 4. Summary of the Invention

According to the invention this object is achieved by an optical switching device of the type defined above provided with the features of the characterizing part of claim 1.

### BRIEF DESCRIPTION OF DRAWINGS

Following figures show the examples of the invention,
Fig. 1 is a graph to show an example of a relationship between wavelength and transmittance of infrared rays incident on an organic thin membrane,
Fig. 2 is an enlarged perspective view of a separated main part of an optical switching device,
Fig. 3 is a cross-sectional view taken in the direction of the arrows along the line III - III of Fig. 2,
Fig. 4 is a cross sectional view taken in the direction of the arrows along the line IV - IV of Fig. 2,
Fig. 5 is a partially enlarged cross-sectional view of an optical switching device, and
Fig. 6 and 7 are partially enlarged cross-sectional views of respective optical switching devices according to other examples.

### DETAILED DESCRIPTION OF PREFERRED EMBODIMENTS

First, an organic thin membrane of the invention will be explained.

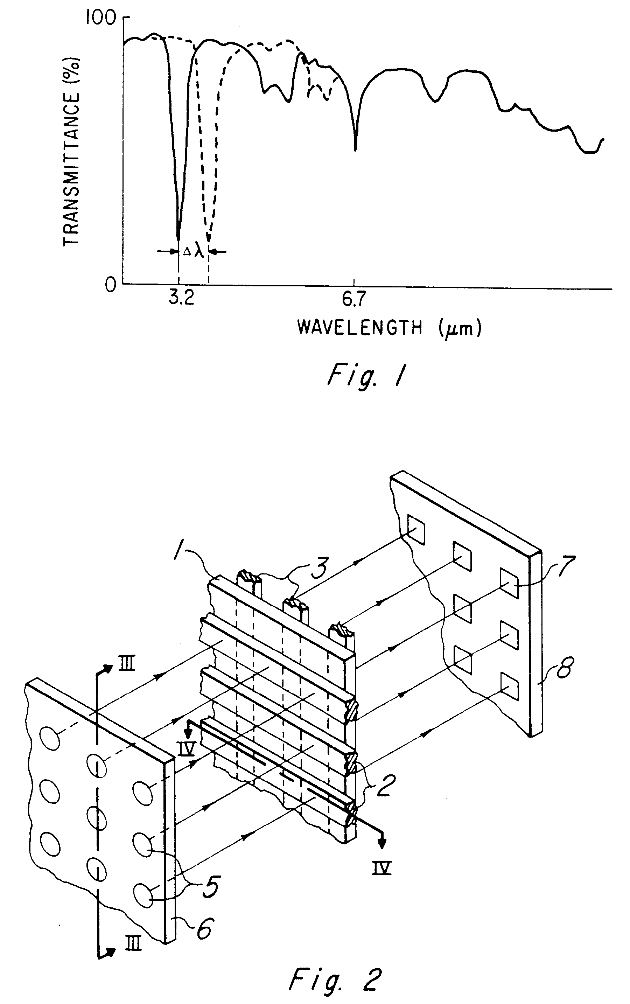

Generally, a thin membrane composed of an organic material including a high molecular compound has the property of absorbing and cutting off infrared ray of wavelengths of the specific range incident on the membrane. For example, an organic thin membrane of a butyl rubber compound shows a spectrum as shown in Fig. 1, that is, it sharply absorbs infrared ray of wavelength of about 3.2 »m as shown by the solid line. This thin membrane is treated as described below to exhibit the property that absorption wavelength of infrared ray shifts as shown by the dotted line in Fig. 1 depending on voltage supplied thereto.

Now, the treatment for the membrane will be explained.

In the process of, for example, synthesizing an organic thin membrane of butyl rubber compound, a functional group having large electronegativity, for exmaple, 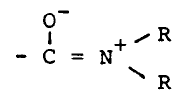
is introduced into butyl rubber molecule by mixing monomers having the above electrogenative group to perform polymerization. When supplying voltage to the thin membrane thus synthesized, it is supposed that intramolecular polarization takes place as follows, namely, in the molecule N⁺ group is directed or attracted to the negative side of electrodes and O⁻ group to the positive side depending on the supplied voltage or potential only with very low energy required for the polarization. The absorption wavelength of infrared ray transmitting this thin membrane shifts by Δλ as shown in Fig. 1. The energizing energy for the organic molecule by the potential as mentioned above can be equivalently represented as hν in optical energy. Here, h is the Planck's constant, ν a frequency being a reciprocal number of wavelength λ. The wavelength of transmitting infrared ray shifts by Δλ and this corresponds to the above frequency and therefore transmittance and cut-off of infrared way of predetermined wavelength are performed with very high-speed response according to supplied voltage.

When the above organic thin membrane is too thick, the intensity of electric field becomes weak insufficient to shift the wavelength at the optical transmittance and when too thin, a response becomes slow due to increased electrostatic capacity.

Organic compounds having the property as described above can be polymethylmethacrylate, acrylonitrile, vinyl chloride, etc. except an organic material of butyl rubber.

Processing of information can be accomplished with super high-speed response in the range of pico-second order, by positioning transparent ("transparent for infrared ray": the same shall apply hereinafter) electrodes on both sides of an organic thin membrane, and by supplying voltage to the membrane to realize the optical transmission or the cut-off of infrared ray of a predetermined wavelength to detect them, while uniformly irradiating the infrared ray to the thin membrane. The above voltage to the membrane is supplied by electrical signals depending on informations. Infrared ray of wavelength of 0.75 to 11 »m can be preferably used as the above infrared ray. Now, the preferred embodiments of the invention will be explained as follows.

Fig. 2 is a partially enlarged perspective view of a disjointed main part of an optical switching device embodying the invention.

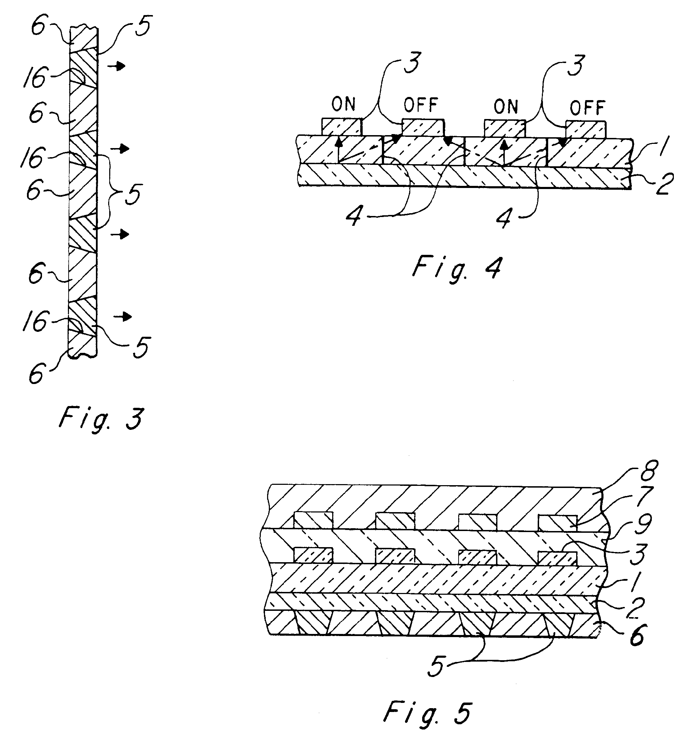

A first group of transparent stripe electrodes 2 (sixteen electrodes 2 in this example) of fine patterns in parallel to each other are positioned in an X-direction on one side of a butyl rubber thin membrane 1 which is treated as described above, and a second group of transparent stripe electrodes 3 (eight electrodes 3 in this example) of fine patterns in parallel to each other are positioned in a Y-direction at a right angle to the X-direction on the other side of the membrane 1. As-In-Sb light emitting elements 5 which emits infrared ray of about 3 »m wavelength are supported by a light emitting element supporting board 6 in a matrix pattern so as to face respective cross regions of the electrodes 2 and the electrodes 3. Wavelength of infrared ray emitted by an As-In-Sb is in the range of 3.1 to 5.4 »m, however, the light emitting elements 5 are adjusted to emit infrared ray of about 3 »m wavelength by regulating the composition of As-In-Sb. The supporting board 6 have many cone-shaped through-holes as shown in Fig. 3 being a cross-sectional view taken in the direction of the arrows along the III - III line of Fig. 2. The light emitting elements 5 are mounted in the through-holes to be supported by the supporting board 6. On the other hand, light receiving elements 7 are supported by a light receiving element supporting board 8 in a matrix pattern to face respective cross regions of the first electrodes 2 and the second electrodes 3.

Alternatively, the electrodes 2 and 3 are not necessarily transparent and can be shaped in a mesh pattern or arranged in parallel.

Binary electric signals are selectively supplied to the electrodes 2 and 3 through an input portion though not shown. When inputting signals to both electrodes 2 and 3 to supply electrode potential (electric potential of 4 - 30V) which can set the both electrodes at "1", on the cross regions therebetween of the thin membrane 1. A transmittance spectrum of infrared ray is shown by a dotted line in Fig. 1 on the above cross regions in which infrared ray of 3.2 »m wavelength passes through the thin membrane 1. Because electric potential is not supplied on the other cross regions, the thin membrane 1 absorbs and cuts off 80 - 90% of irradiated infrared ray of 3.2 »m wavelength. The light receiving elements 7 detect transmission and cut-off of the infrared ray, and thus detected signals by the light receiving elements 7 are transformed to binary electric signals and then output from the device. A cross-talk may take place at undesired position, because the cross regions where the electrodes 2 and 3 are positioned closely to each other at a short distance. In this case, to prevent it, it is preferable that separators 4 made of insulating material are positioned in the thin membrane between adjacent electrodes to cut off leak current shown by a dash and dotted line, as shown in Fig. 4 being a sectional view taken in the arrows along the IV - IV line of Fig. 2.

Alternatively, it is of course possible to transmit and cut off the infrared ray in the reverse way to the above-mentioned one in such a manner that wavelength of infrared ray emitted by the light emitting element is set at 3.2 »m + Δλ.

The optical switching device of this example can be industrially produced preferably by the following processes.
(1) Light emitting elements for infrared ray of In As₍₁₋ₓ₎Sbₓ or the like are set on a light emitting element supporting board 6.
(2) Transparent electrodes 2 made of single crystal silicon etc. are formed in stripe pattern by the known photoetching on the supporting board.
(3) Organic compounds, for example, butyl rubber or butyl rubber in monomer form, solved in a solvent are coated in 5 to 20 »m thickness on the board by spin coating method etc. and dried to be a thin membrane 1.
(4) Transparent electrodes 3 are formed on the membrane by the same way as the above described (2).
(5) A light receiving element supporting board 8 to support light receiving elements 7 is mounted on the transparent electrodes 3.
(6) The above whole unit is housed in a protecting package.

Thus, the optical switching device having the structure shown in Fig. 5 are constructed. In the figure, a numeral 9 indicates a transparent intermediate layer, and the package is not shown in Fig. 5.

The optical switching device in this example, as described above, has many advantages that high integration degree is realized by positioning many electrodes 2 and 3, super high-speed processing can be performed using infrared ray, power consumption is lowered, and industrial production of the device is possible. It is possible to realize a super high-speed process computer, so these advantages can not be obtained by the device of the prior art. Actually, the optical switching device of the prior art was manufactured using an inorganic thin membrane, and it was operated under incidence of laser beam of 1.2 to 1.3 »m wavelength in switching response in the range of nano-second order. On the other hand, the optical switching device of the example was operated in switching response in the range of pico-second order, which is extremely shorter, than is about 1/10³ of the speed of the prior art.

Far infrared rays of predetermined wavelength not exceeding 11 »m can be used for the device by using Pb Cd S light emitting elements for far infrared rays or the like instead of the above As In Sb light emitting elements as the light emitting elements 5. In this case, usable materials of the organic thin membrane can be suitably selected for the wavelength, for example, acrylonitrile can be used for rays of 6 - 7 »m wavelength, polyvinyl pyrrolidone for rays of 7 - 8 »m wavelength, and butadiene rubber for rays of 10 - 11 »m wavelength, respectively.

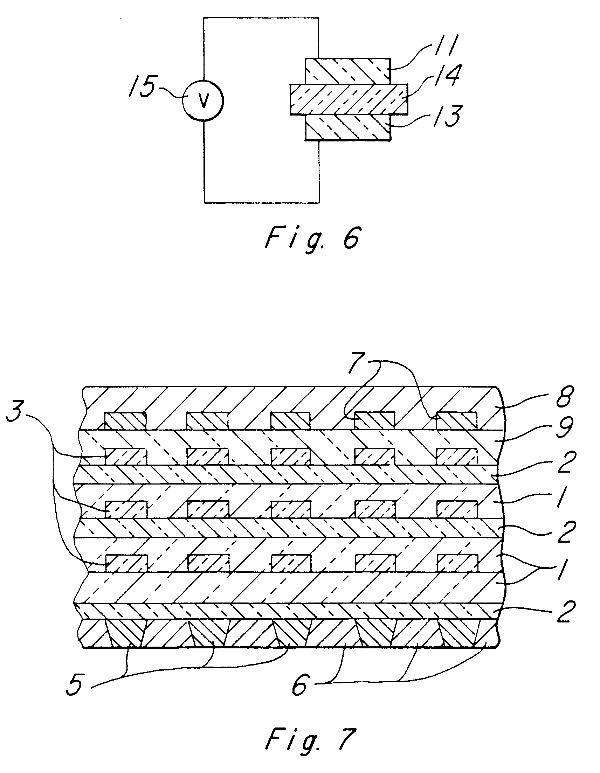

Alternatively, as enlarged in Fig. 6, electrically conductive organic thin membranes 11 which have the both functions of the organic thin membranes and the first electrodes are formed on one side of a transparent base 14, second electrodes 13 are formed on the other side of it. And, the thin membranes 11 and the electrodes 13 can be respectively positioned as the formers are in X-direction and the latters are in Y-direction. However, Fig. 6 shows the structure in principle.

Besides, the above examples can be variously modified on the basis of the technical concept of the invention.

For example, when the thin membranes have the both functions of the organic thin membranes and the first electrodes, it is not necessary to form the first electrodes separately, and therefore manufacturing process of the device can be simplified.

The light emitting element supporting board 6 for supporting the light emitting elements and/or the light receiving element supporting board 8 for supporting the light receiving elements and/is spaced from the laminated structure of the organic thin membrane 1 and electrodes 2, 3. For example, they are respectively positioned in adjacent rooms with a window disposed therebetween. Alternatively, they are respectively positioned in the first building and the second building which are located face to face across a road, whereby emitting and receiving of signals can be performed by irradiation of infrared rays between places positioned at a distance. In this case, the emitting and receiving of the signals in the prior art by laser beam using the inorganic thin membrane result in attenuation of light signals due to the shortness of its wavelength and therefore the distance is restricted. On the contrary, the invention using infrared rays having longer wavelength have an advantage that the distance is less restricted because of extremely small attenuation of light signal, in addition to the before-described advantage. When performing optical communication between places at a long distance, a mass information can be sent by setting many light emitting elements, many light receiving elements and many optical fibers corresponding to them between either the first or the second electrodes and the light receiving element portion.

Alternatively, as shown in Fig. 7, a complex logic circuit using infrared rays having a multi-laminated structure can be constructed by laminating first electrodes 2, an organic thin film 1 and second electrodes 3 by plural times. The optical switching device having this laminated structure is to provide an integrated logic circuit in which output is "0" at a cross region of the electrodes where at least one of the first electrodes 2 in the layers are supplied with no voltage, and output is "1" at a cross region of the electrodes where all of the electrodes 2 are supplied with the voltage.

### 6. Effect of the Invention

As described above, the optical switching device according to the invention is so constructed as to selectively enable transmission and cut-off of the infrared ray of a predetermined wavelength by applying the organic thin membrane. Consequently, the device can be operated with extremely quick response in the order of pico-second. Therefore, the information processing can be performed in high speed being not possibly attained by the prior device, realizing super high-speed processing. Moreover, materials for the applied organic thin membrane are easily available and usable with no trouble, and industrial production of the optical switching devices can be easily performed.

## Claims

1. An optical switching device comprising:
an electro-optic material having the property of varying the degree of optical transmission of infrared light of a predetermined wavelength incident on the material in dependence upon the application of an electrical potential to the material,
said material optically transmitting said infrared light of said predetermined wavelength in response to the application of an electrical potential at a first magnitude thereto and at least partially absorbing said infrared light of said predetermined wavelength in response to the application of an electrical potential at a second magnitude thereto;
characterized in that
said material comprises a thin solid membrane film (1) of organic material having a functional organic chemical group incorporated therein to impart electro-negativity to the thin film (1) of a degree sufficient to vary the optical transmission and cut-off of infrared light of a predetermined wavelength incident on said thin film (1) in dependence upon application of an electrical potential to the thin film; and that
first (2) and second (3) electrode means transparent to said infrared light of said predetermined wavelength are respectively disposed on the opposite sides of said thin film (1) of organic material.

2. An optical switching device as set forth in claim 1, wherein said organic material includes a butyl rubber compound.

3. An optical switching device as set forth in claim 2, wherein said functional organic chemical group incorporated in said thin film of organic material to impart electro-negativity thereto comprises:

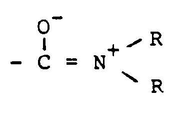

4. An optical switching device as set forth in claim 3, wherein said thin film (1) of organic material is a polymerized composition of isobutylene and isoprene mixed with monomers of said functional organic chemical group.

5. An optical switching device as set forth in claim 1, wherein said organic material is polymethyl methacrylate.

6. An optical switching device as set forth in claim 1, wherein said organic material is acrylonitrile.

7. An optical switching device as set forth in claim 1, wherein said organic material is vinyl chloride.

8. An optical switching device as set forth in claim 1, further including means operably connected to said first (2) and second (3) electrode means of the optical switching device for applying an electrical potential to said thin film (1) of organic material via said first (2) and second (3) electrode means.

9. An optical switching device as set forth in claim 8, wherein said means for applying an electrical potential comprises a source of binary digital information, said source of binary digital information providing a first electrical potential signal representative of a logic "1" and a second electrical potential signal representative of a logic "O";
said thin film (1) of organic material transmitting said infrared light of said predetermined wavelength in response to the application of said first electrical potential signal representative of a logic "1" thereto, and absorbing said infrared light of said predetermined wavelength in response to the application of said second electrical potential signal representative of a logic "O" thereto.

10. An optical switching device as set forth in claim 9, further including infrared light detecting means (7) disposed on the side of said film (1) of organic material opposite from the side thereof to which said infrared light of said predetermined wavelength is incident and sensing the presence or absence of infrared light for detecting the transmission or cut-off of said infrared light of said predetermined wavelength by said thin film (1) of organic material.

11. An optical switching device as set forth in claim 8, wherein said first and second electrode means comprises:
a first plurality of spaced parallel electrode strips of material transparent to said infrared light of said predetermined wavelength disposed on one side of said thin film (1) of organic material; and
a second plurality of spaced parallel electrode strips of material transparent to said infrared light of said predetermined wavelength disposed on the opposite side of said thin film (1) of organic material, said second plurality of electrode strips (3) being arranged in normal relation to said first plurality of electrode strips (2) to define a matrix of cross-over regions on said thin film of organic material corresponding to the intersections between electrode strips of said first (2) and second (3) pluralities of electrode strips.

12. An optical switching device as set forth in claim 11, further including plural sources of infrared light (5) of said predetermined wavelength disposed on one side of said thin film (1) of organic material, each of said plural sources of infrared light (5) being in registration with a respective location on said thin film (1) of organic material corresponding to a cross-over region thereon as defined by the intersections between said electrode strips of said first (2) and second (3) pluralities of electrode means on the opposite sides of said thin film (1) of organic material; and
infrared light detecting means (7) disposed on the side of said thin film of organic material opposite from the side on which said plural sources of infrared light (5) are disposed, said infrared light detecting means (7) having a plurality of target regions in respective registration with each source of infrared light (5) and the corresponding cross-over region defined in said thin film (1) of organic material by the intersections between said electrode strips of said first (2) and second (3) pluralities of electrode means on opposite sides of said thin film (1) of organic material.

13. An optical switching device as set forth in claim 12, wherein a plurality of separators (4) of insulating material are provided in said thin film (1) of organic material extending between respective adjacent electrodes on opposite sides of said thin film (1) of organic material and located to electrically insulate respective adjacent cross-over regions in said thin film (1) of organic material from each other.

14. An optical switching device as set forth in claim 12, wherein said thin film (1) of organic material, said first (2) and second (3) pluralities of electrode strips mounted on opposite sides thereof, said plural sources of infrared light (5) of said predetermined wavelength, and said infrared light detecting means comprise a monolithic integrated unit.

15. An optical switching device as set forth in claim 12, further including a stacked assembly of respective sets of thin films (1) of organic material and first (2) and second (3) pluralities of electrode strips mounted on opposite sides thereof to define a plurality of individual optical switching units;
said plural sources of infrared light (5) of said predetermined wavelength being disposed on one side of said plurality of individual optical switching units; and
said infrared light detecting means (7) being disposed on the opposite side of said plurality of individual optical switching units.

16. An optical switching device as set forth in claim 1, further including a base panel (14) of a material transparent to infrared light of said predetermined wavelength;
said thin film (1) of organic material of the electrically conductive type forming the first electrode means (2) on one side of said base panel; and
the second electrode means (3) of a material transparent to infrared light of said predetermined wavelength mounted on the opposite side of said base panel.

17. A method of processing data comprising the steps of:
providing an optical switching device as claimed in claim 1 comprising
an electro-optic material having the property of varying the degree of optical transmisssion of infrared light of a predetermined wavelength when subjected to an electrical potential;
directing a source of infrared light (5) of a predetermined wavelength onto one side of said material;
applying one of a first and second electrical potential signal to the thin film of organic material wherein the respective first and second electrical potential signals represent logic "1" and logic "0";
detecting the transmission or cut-off of infrared light of said predetermined wavelength by said thin film of organic material in synchronism with the application of said one of said first and second electrical potential signals to said thin film of organic material and providing output signals indicative of such detection; and
converting the output signals to binary electrical signals.

## Patentansprüche

1. Optische Schaltvorrichtung mit:
einem elektrooptischen Material, das die Eigenschaft hat, den Grad der optischen Durchlässigkeit für infrarotes Licht einer vorbestimmten Wellenlänge, das auf das Material fällt, abhängig vom Anlegen eines elektrischen Potentials an das Material zu ändern,
wobei das Material das Infrarotlicht mit der vorbestimmten Wellenlänge abhängig vom Anlegen eines elektrischen Potentials einer ersten Größe optisch durchläßt und das Infrarotlicht mit der vorbestimmten Wellenlänge abhängig vom Anlegen eines elektrischen Potentials einer zweiten Größe zumindest teilweise absorbiert,
dadurch gekennzeichnet, daß
das Material ein dünner einteiliger Membranfilm (1) aus organischem Material beinhaltet, das eine funktionelle organisch-chemische Gruppe enthält, damit der dünne Film (1) in einem ausreichenden Maß elektrisch negativ gemacht wird, und die optische Durchlässigkeit und Blockierung von Infrarotlicht mit einer vorbestimmten Wellenlänge, das auf den dünnen Film (1) fällt, in Abhängigkeit von einem, an den dünnen Film angelegten elektrischen Potential zu verändern; und daß
an den gegenüberliegenden Seiten des dünnen Films (1) aus organischem Material erste (2) bzw. zweite (3) Elektrodenmittel angebracht sind, die für das Infrarotlicht mit der vorbestimmten Wellenlänge durchlässig sind.

2. Optische Schaltvorrichtung nach Anspruch 1, bei welcher das organische Material eine Butylgummiverbindung enthält.

3. Optische Schaltvorrichtung nach Anspruch 2, bei welcher die funktionelle organisch-chemische Gruppe, die in dem dünnen Film aus organischem Material enthalten ist, um ihn elektrisch negativ zu machen, beinhaltet:

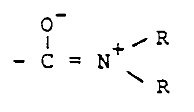

4. Optische Schaltvorrichtung nach Anspruch 3, bei welcher der dünne Film (1) aus organischem Material eine polymerisierte Zusammensetzung aus Isobutylen und Isopren gemischt mit Monomeren der funktionellen organisch-chemischen Gruppe ist.

5. Optische Schaltvorrichtung nach Anspruch 1, bei welcher das organische Material Polymethylmethacrylat ist.

6. Optische Schaltvorrichtung nach Anspruch 1, bei welcher das organische Material Acrylnitril ist.

7. Optische Schaltvorrichtung nach Anspruch 1, bei welcher das organische Material Vinylchlorid ist.

8. Optische Schaltvorrichtung nach Anspruch 1, ferner enthaltend Mittel, die wirkungsmäßig mit den ersten (2) und zweiten (3) Elektrodenmitteln der optischen Schaltvorrichtung verbunden sind, um an den dünnen Film (1) aus organischem Material über die ersten (2), und zweiten (3) Elektrodenmittel ein elektrisches Potential anzulegen.

9. Optische Schaltvorrichtung nach Anspruch 8, bei welcher die Mittel zum Anlegen eines elektrischen Potentials eine Quelle binärer digitaler Informationen enthält, die ein erstes elektrisches Potentialsignal liefert, das eine logische "1" repräsentiert, und ein zweites elektrisches Potentialsignal liefert, das eine logische "0" repräsentiert;
wobei der dünne Film (1) aus organischem Material das Infrarotlicht mit der vorbestimmten Wellenlänge abhängig vom Anlegen des ersten elektrischen Potentialsignals, das eine logische "1" repräsentiert, durchläßt, und das Infrarotlicht mit der vorbestimmten Wellenlänge abhängig vom Anlegen des zweiten elektrischen Potentialsignals, das eine logische "0" repräsentiert, absorbiert.

10. Optische Schaltvorrichtung nach Anspruch 9, ferner enthaltend Detektormittel (7) für Infrarotlicht, die an der Seite des Films (1) aus organischem Material gegenüber der Seite angeordnet sind, auf die das Infrarotlicht mit der vorbestimmten Wellenlänge fällt, und die die Anwesenheit oder Abwesenheit von Infrarotlicht zum Erfassen des Durchlassens oder Blockierens des Infrarotlichts mit der vorbestimmten Wellenlänge durch den dünnen Film (1) aus organischem Material feststellen.

11. Optische Schaltvorrichtung nach Anspruch 8, bei welcher die ersten und zweiten Elektrodenmittel enthaltend:
eine erste Menge von im Abstand voneinander liegenden parallelen Elektrodenstreifen aus einem für das Infrarotlicht mit der vorbestimmten Wellenlänge durchlässigem Material, die auf einer Seite des dünnen Films (1) aus organischem Material angebracht sind; und
eine zweite Menge von dem Abstand voneinander liegenden parallelen Elektrodenstreifen aus einem für das Infrarotlicht mit der vorbestimmten Wellenlänge durchlässigen Material, die auf der anderen Seite des dünnen Films (1) aus organischem Material angeordnet sind, wobei die zweite Menge der Elektrodenstreifen (3) senkrecht zu der ersten Menge der Elektrodenstreifen (2) angeordnet ist, damit eine Matrix aus Überkreuzungsbereichen auf dem dünnen Film aus organischem Material gebildet werden, die den Überkreuzungen zwischen Elektrodenstreifen der ersten (2) und zweiten (3) Mengen aus Elektrodenstreifen entsprechen.

12. Optische Schaltvorrichtung nach Anspruch 11, ferner enthaltend mehrere Infrarotlicht-Quellen (5) mit der vorbestimmten Wellenlänge, die auf einer Seite des dünnen Films (1) aus organischem Material angeordnet sind, wobei jede der mehreren Infrarotlicht-Quellen (5) auf einen jeweiligen Ort auf dem dünnen Film (1) aus organischem Material ausgerichtet ist, der einem darauf befindlichen Überkreuzungsbereich entspricht, wie er durch die Überkreuzungen zwischen den Elektrodenstreifen der ersten (2) und zweiten (3) Mengen der Elektrodenmittel auf den gegenüberliegenden Seiten des dünnen Films (1) aus organischem Material definiert ist; und
Infrarotlicht-Detektormittel (7), die auf der Seite des dünnen Films aus organischem Material angeordnet sind, die der Seite gegenüberliegt, auf der die mehreren Infrarotlicht-Quellen (5) angeordnet sind, wobei die Infrarotlicht-Detektormittel (7) mehrere Zielbereiche aufweisen, die jeweils auf jede der Infrarotlicht-Quellen (5) und den entsprechenden Überkreuzungsbereich ausgerichtet sind, der in dem dünnen Film (1) aus organischem Material durch die Überkreuzungen zwischen den Elektrodenstreifen der ersten (2) und zweiten (3) Mengen der Elektrodenmittel auf gegenüberliegenden Seiten des dünnen Films (1) aus organischem Material gebildet sind.

13. Optische Schaltvorrichtung nach Anspruch 12, bei welcher mehrere Trennelemente (4) aus isolierendem Material in dem dünnen Film (1) aus organischem Material vorgesehen sind, die sich jeweils zwischen benachbarten Elektroden auf beiden Seiten des dünnen Films (1) aus organischem Material erstrecken und die so angeordnet sind, daß sie jeweils benachbarte Überkreuzungsbereiche in dem dünnen Film (1) aus organischem Material elektrisch voneinander isolieren.

14. Optische Schaltvorrichtung nach Anspruch 12, bei welcher der dünne Film (1) aus organischem Material, die ersten (2) und zweiten (3) Mengen aus Elektrodenstreifen, die auf dessen beiden Seiten angebracht sind, die mehreren Infrarotlicht-Quellen (5) mit der vorbestimmten Wellenlänge und die Infrarotlicht-Detektormittel eine monolithische integrierte Baueinheit bilden.

15. Optische Schaltvorrichtung nach Anspruch 12, ferner enthaltend eine gestapelte Anordnung aus jeweiligen Gruppen dünner Filme (1) aus organischem Material und ersten (2) und zweiten (3) Mengen aus Elektrodenstreifen, die auf deren beiden Seiten zur Bildung mehrerer einzelner optischer Schalteinheiten angeordnet sind;
wobei die mehreren Infrarotlicht-Quellen (5) mit der vorbestimmten Wellenlänge auf einer Seite der mehreren einzelnen optischen Schalteinheiten angeordnet sind; und
wobei die Infrarotlicht-Detektormittel (7) auf der entgegengesetzten Seite der mehreren einzelnen optischen Schalteinheiten angeordnet sind.

16. Optische Schaltvorrichtung nach Anspruch 1, ferner enthaltend eine Grundplatte (14) aus einem für Infrarotlicht mit der vorbestimmten Wellenlänge durchlässigen Material;
wobei der dünne Film (1) aus organischem Material vom elektrisch leitenden Typ die ersten Elektrodenmittel (2) auf einer Seite der Grundplatte bildet; und
die zweiten Elektrodenmittel (3) aus einem für Infrarotlicht mit der vorbestimmten Wellenlänge durchlässigen Material auf der entgegengesetzten Seite der Grundplatte angebracht sind.

17. Verfahren zum Verarbeiten von Daten, enthaltend die Schritte:
Schaffung einer optischen Schaltvorrichtung nach Anspruch 1 mit einem elektrooptischen Material, das die Eigenschaft hat, den Grad der optischen Durchlässigkeit für Infrarotlicht mit einer vorbestimmten Wellenlänge zu verhindern, wenn es einem elektrischen Potential ausgesetzt wird;
Richten einer Infrarotlicht-Quelle (5) mit einer vorbestimmten Wellenlänge auf eine Seite des Materials;
Anlegen eines von einem ersten und einem zweiten elektrischen Potentialsignals an den dünnen Film aus organischem Material, wobei die ersten und zweiten elektrischen Potentialsignale eine logische "1" bzw. eine logische "0" repräsentieren;
Feststellen des Durchlassens oder Blockierens von Infrarotlicht mit der vorbestimmten Wellenlänge durch den dünnen Film aus organischem Material synchron mit dem Anlegen des einen der ersten und zweiten elektrischen Potentialsignale an den dünnen Film aus organischem Material und Erzeugen von Ausgangssignalen, die dieses Feststellen anzeigen; und
Umsetzen der Ausgangssignale in binäre elektrische Signale.

## Revendications

1. Dispositif de commutation optique comprenant:
un matériau optoélectronique ayant la propriété de modifier le degré d'émission optique de lumière infrarouge d'une longueur d'onde prédéterminée incidente sur la matériel en fonction de l'application au matériau d'un potentiel électrique,
ledit matériau émettant de façon optique ladite lumière infrarouge de ladite longueur d'onde prédéterminée en réponse à l'application d'un potentiel électrique d'une première amplitude et absorbant au moins partiellement ladite lumière infrarouge de ladite longueur prédéterminée en réponse à l'application d'un potentiel électrique d'une seconde amplitude ; caractérisé en ce que
ledit matériau comprend un film mince de membrane solide (1) d'un matériau organique ayant un groupe chimique fonctionnel organique qui lui est incorporé pour fournir une électronégativité au film mince (1) d'un degré suffisant pour faire varier l'émission optique et la coupure d'une lumière infrarouge d'une longueur d'onde prédéterminée incidente sur ledit film mince (1) en fonction de l'application d'un potentiel électrique au film mince ; et en ce que
des premier (2) et second (3) moyens d'électrodes transparents à ladite lumière infrarouge de ladite longueur d'onde prédéterminée sont respectivement disposés sur les côtés opposés dudit film mince (1) de matériau organique.

2. Dispositif de commutation optique selon la revendication 1, dans lequel ledit matériau organique comporte un composé caoutchouteux butylique.

3. Dispositif de commutation optique selon la revendication 2, dans lequel ledit groupe chimique fonctionnel organique incorporé dans ledit film mince de matériau organique pour lui fournir une électronégativité comporte :

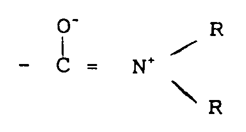

4. Dispositif de commutation optique selon la revendication 3, dans lequel ledit film mince (1) de matériau organique est un composé polymérisé d'isobutylène et d'isoprène mélangé avec des monomères dudit groupe chimique fonctionnel organique.

5. Dispositif optique selon la revendication 1, dans lequel ledit matériau organique est un méthacrylate de polymethyle.

6. Dispositif optique selon la revendication 1, dans lequel ledit matériau organique est de l'acrylnitrile.

7. Dispositif de commutation selon la revendication 1, dans lequel ledit matériau organique est du chlorure de vinyle.

8. Dispositif de commutation optique selon la revendication 1, comportant de plus des moyens aptes à être actionnés pour relier lesdits premier (2) et second (3) moyens d'électrode du dispositif de commutation optique pour appliquer un potentiel électrique audit film mince (1) de matériau organique par l'intermédiaire desdits premier (2) et second (3) moyens d'électrode.

9. Dispositif de commutation optique selon la revendication 8, dans lequel lesdits moyens pour appliquer un potentiel électrique comportent une source d'informations numériques binaires, ladite source d'informations numériques binaires fournissant un premier signal de potentiel électrique correspondant à un niveau logique "1" et un second signal de potentiel électrique correspondant à un niveau logique "0" ;
ledit film mince (1) de matériau organique émettant ladite lumière infrarouge de ladite longueur d'onde prédéterminée en réponse à l'application sur celui-ci dudit premier signal de potentiel électrique correspondant à un niveau logique "1", et absorbant ladite lumière infrarouge de ladite longueur d'onde prédéterminée en réponse à l'application sur celui-ci dudit second signal de potentiel électrique correspondant à un niveau logique "0".

10. Dispositif de commutation optique selon la revendication 9, comportant de plus des moyens de détection de lumière infrarouge (7) disposés sur le côté dudit film (1) de matériau organique opposé à son côté sur lequel ladite lumière infrarouge de ladite longueur d'onde prédéterminée est incidente et détectant la présence ou l'absence de lumière infrarouge pour détecter l'émission ou la coupure de ladite lumière infrarouge de ladite longueur d'onde prédéterminée par ledit film mince (1) de matériau organique.

11. Dispositif de commutation optique selon la revendication 8, dans lequel lesdits premier et second moyens d'électrode comportent :
une première pluralité de bandes formant électrodes parallèles espacées de matériau transparent à ladite lumière infrarouge de ladite longueur d'onde prédéterminée disposées sur un côté dudit film mince (1) de matériau organique ; et
une seconde pluralité de bandes formant électrodes parallèles espacées de matériau transparent à ladite lumière infrarouge de ladite longueur d'onde prédéterminée disposées sur le côté opposé dudit film mince (1) de matériau organique, ladite seconde pluralité de bandes formant électrodes (3) étant disposées de façon perpendiculaire à ladite pluralité de bandes formant électrodes (2) de manière à définir une matrice de régions de jonctions sur ledit film mince de matériau organique correspondant aux intersections entre les bandes formant électrodes desdites première (2) et seconde (3) pluralité de bandes formant électrodes.

12. Dispositif de commutation optique selon la revendication 11, comportant de plus de multiples sources de lumière infrarouge (5) de ladite longueur d'onde prédéterminée disposées sur un côté dudit film mince (1) de matériau organique, chacune desdites multiples sources de lumière infrarouge (5) étant repérée à un emplacement correspondant sur ledit film mince (1) de matériau organique correspondant à une région de jonctions sur celui-ci telle que définie par les intersections entre lesdites bandes formant électrodes de ladite première (2) et seconde (3) pluralités de moyens d'électrodes sur les côtés opposés dudit film mince (1) de matériau organique; et
des moyens (7) de détection de lumière infrarouge disposés sur le côté dudit film mince de matériau organique opposé au côté sur lequel lesdites multiples sources de lumière infrarouge (5) sont disposées, lesdits moyens (7) de détection de lumière infrarouge comportant une pluralité de zones cibles en concordance respective avec chaque source de lumière infrarouge (5) et la zone de jonction correspondante définie dans ledit film mince (1) de matériau organique par les intersections entre lesdites bandes formant électrodes desdites première (2) et seconde pluralités de moyens d'électrodes sur les côtés opposés dudit film mince (1) de matériau organique.

13. Dispositif de commutation optique selon la revendication 12, dans lequel une pluralité de séparateurs (4) de matériau isolant sont prévus dans ledit film mince (1) de matériau organique s'étendant entre les électrodes adjacentes respectives sur les côtés opposés dudit film mince (1) de matériau organique et disposés pour isoler électriquement les zones de jonction adjacentes respectives dans ledit film mince (1) de matériau organique les unes des autres.

14. Dispositif de commutation optique selon la revendication 12, dans lequel ledit film mince (1) de matériau organique, lesdites première (2) et seconde pluralités de bandes formant électrodes montées sur ses côtés opposés, lesdites multiples sources de lumière infrarouge (5) de ladite longueur d'onde prédéterminée et lesdits moyens de détection de lumière infrarouge comportent une unité intégrée monolithe.

15. Dispositif de commutation optique selon la revendication 12, comportant de plus un assemblage empilé d'ensembles respectifs de films minces (1) de matériau organique et des première (2) et seconde (3) pluralités de bandes formant électrodes montées sur les côtés opposés de ceux-ci pour définir une pluralité d'unités de commutation optique individuelles ;
lesdites multiples sources de lumière infrarouge (5) de ladite longueur d'onde prédéterminée étant disposées sur un côté de ladite pluralité d'unités de commutation optique individuelles ; et
lesdits moyens (7) de détection de lumière infrarouge étant disposés sur le côté opposé de ladite pluralité d'unités de commutation optique individuelles.

16. Dispositif de commutation optique selon la revendication 1, comportant de plus un panneau de base (14) d'un matériau transparent à la lumière infrarouge de ladite longueur d'onde prédéterminée ;
ledit film mince (1) de matériau organique du type électriquement conducteur formant les premier moyens d'électrodes (2) sur un côté dudit panneau de base ; et
les seconds moyens d'électrodes (3) d'un matériau transparent à la lumière infrarouge de ladite longueur d'onde prédéterminée étant disposés sur le côté opposé dudit panneau de base.

17. Procédé de traitement de données comportant les étapes consistant à :
fournir un dispositif de commutation optique selon la revendication 1 comprenant un matériau optoélectronique ayant la propriété de modifier le degré d'émission optique de lumière infrarouge d'une longueur d'onde prédéterminée lorsqu'il est soumis à un potentiel électrique ;
diriger une source de lumière infrarouge (5) d'une longueur d'onde prédéterminée sur un côté dudit matériau ;
appliquer un parmi un premier et un second signal de potentiel électrique au film mince de matériau organique dans lequel les premier et second signaux de potentiel électrique respectifs représentent un niveau logique "1" et un niveau logique "0" ;
détecter l'émission ou l'arrêt de l'émission de lumière infrarouge de ladite longueur d'onde prédéterminée par ledit film mince de matériau organique en synchronisme avec l'application dudit signal parmi lesdits premier et second signaux de potentiel électrique audit film mince de matériau organique et fournir des signaux de sortie indiquant une telle détection ; et
convertir les signaux de sortie en signaux électriques binaires.
